# EUROPÄISCHE PATENTSCHRIFT

(11) **EP 1 356 756 B1**
(45) Veröffentlichungstag und Bekanntmachung des Hinweises auf die Patenterteilung: **28.06.2006**
(21) Anmeldenummer: 03009276.1
(22) Anmeldetag: 24.04.2003
(51) Int. Cl.: A47L 9/24, F16L 37/084

(54) **Kupplungsmuffe für die Verbindung eines Saugschlauchs mit einem Gehäuse**
Coupling sleeve for connecting a suction hose with a casing
Manchon d'accouplement pour raccorder un tuyau d'aspiration flexible avec un boîtier

(30) Priorität: 26.04.2002 DE 20206730 U
(43) Veröffentlichungstag der Anmeldung: 29.10.2003
(73) Patentinhaber: TRUPLAST KUNSTSTOFFTECHNIK GMBH, D-35428 Langgöns (DE)
(72) Erfinder: Linhart, Georg Peter, 61206 Wöllstadt (DE)
(74) Vertreter: Oppermann, Ewald

(56) Entgegenhaltungen:
- EP-A- 0 803 225
- DE-A- 4 019 408
- DE-A- 4 240 913
- DE-A- 10 046 919
- US-A- 2 444 888
- US-A- 5 755 578

## Beschreibung

Die Erfindung bezieht sich auf eine Kupplungsmuffe für die lösbare Verbindung eines Saugschlauchs mit einem Gehäuse, insbesondere Staubsaugergehäuse, entsprechend dem Oberbegriff des Anspruchs 1.

Derartige bekannte Kupplungsmuffen mit den an ihrem Außenumfang angeformten Rastzungen sind aus einem thermoplastischen Kunststoff, in der Regel aus Polypropylen spritzgeformt. Bei Verrastungs- und Entrastungsvorgängen werden die Rastzungen insbesondere im Bereich ihrer Zungenwurzeln verformt, um die Rastelemente in Eingriff oder außer Eingriff zu bringen. Bei häufigen Wiederholungen dieser Vorgänge kommt es über längere Zeiträume zu einer Materialermüdung, so daß sich die Rückfederungs- oder Rückstelleigenschaften der Rastzungen verschlechtern und sich im Ergebnis keine sicheren Verrastungen mehr erzielen lassen.

Eine, Kupplungsmuffe gemäß dem Oberbegriff von Anspruch 1 ist aus der US-A-2,444,888 bekannt. Diese bekannte Kupplungsmuffe besteht aus einer Vielzahl von Bauteiten, was sich nachteilig auf deven Herstell-und Montierbarkeit auswirkt.

Der Erfindung liegt die Aufgabe zugrunde, eine Kupplungsmuffe der eingangs angegebenen Ausführung so auszubilden, daß die Rückfederungseigenschaften der Rastzungen verbessert und über längere Zeiträume erhalten bleiben.

Diese Aufgabe wird erfindungsgemäß durch die Merkmale des Anspruchs 1 gelöst. Vorteilhafte oder zweckmäßige Weiterbildungen gehen aus den Unteransprüchen hervor und werden nachfolgend ebenfalls beschrieben.

Durch die Abstützung der Rastzungen an den Auflagervorsprüngen und die Positionierung der Auflagervorsprünge mit Bezug auf die Zungenwurzeln und die Rastnasen an den Rastzungen wird erreicht, daß die Federungseigenschaften der Rastzungen verbessert und ein sicherer Verrastungseingriff der Kupplungsmuffe mit der Aufnahmevertiefung des Gehäuses über lange Benutzungszeiträume erzielt wird. Durch die Abstützung der Rastzungen an der angegebenen Stelle findet bei Verrastungs- und Entrastungsbetätigungen der Rastzungen die gewünschte elastische Verformung nicht mehr im wesentlichen im Bereich der Zungenwurzeln statt, sondern ist im wesentlichen eine elastische Biegeverformung der Rastzungen selbst.

Erfindungsgemäß ist die Kupplungsmuffe, aus zwei getrennt bevorzugt durch Spritzformung hergestellten Teilen, nämlich aus einem rohrartigen Außenteil und einem rohrartigen Innenteil, aufgebaut, die zur fertigen Kupplungsmuffe durch axiales Ineinanderschieben vereinigt werden. Dabei enthält das Außenteil die aus der Wandung desselben gebildeten Rastzungen, während die zugeordneten Auflagervorsprünge am Innenteil vorgesehen sind.

Die Verrastung läßt sich vorteilhaft noch verbessern, wenn die Auflagervorsprünge in ihrer Höhe so ausgebildet sind, daß sie gemäß Anspruch 2 die Rastzungen mit Vorspannung abstützen, wodurch die Rastzungen eine geringfügige nach außen gerichtete elastische Biegeverformung erfahren, die der Verformungsrichtung bei verrastender oder entrastender Betätigungsbiegeverformung der Rastzungen entgegengesetzt gerichtet ist

Bei der erfindungsgemäßen Ausbildung der Kupplungsmuffe läßt sich der vorgenannte Effekt zweckmäßig durch die im Anspruch 3 angegebenen Maßnahmen erreichen.

Für die aus zwei zunächst getrennten Teilen aufgebaute Kupplungsmuffe sind zwei Ausführungsformen in den Ansprüchen 4 und 5 angegeben.

Die konzentrische Anordnung von Außenteil und Innenteil und der dadurch entstehende in Umfangsrichtung gleichbleibende radiale Abstand zwischen Außenteil und Innenteil wird durch die im Anspruch 6 angegebenen Maßnahmen erreicht.

Die aus Anspruch 7 ersichtlichen Axialstege am Innenteil stützen das Innenteil zusätzlich am Außenteil ab, erleichtern das Einschieben des Innenteils in das Außenteil bei der Montage der Kupplungsmuffe und begrenzen paarweise die Aufnahmeräume für die biegebeweglichen Rastzungen. Dabei können die Auflagervorsprünge gemäß Anspruch 8 an Querstegen gebildet sein, welche die paarweise angeordneten Axialstege miteinander verbinden.

Weitere Einzelheiten der Erfindung werden nachfolgend anhand zweier in den Zeichnungen dargestellter Ausführungsbeispiele näher beschrieben. Es zeigt:
- Fig. 1: den Längsschnitt durch die Kupplungsmuffe des ersten Ausführungsbeispiels, vereinigt mit einem abgebrochen dargestellten Gehäuse und fest angeschlossenem Saugschlauch,
- Fig. 2: eine Perspektivansicht des Innenteils des ersten Ausführungsbeispiels,
- Fig. 3: eine Perspektivansicht des Außenteils des ersten Ausführungsbeispiels und
- Fig. 4: den Längsschnitt durch die Kupplungsmuffe des zweiten Ausführungsbeispiels, vereinigt mit einnem abgebrochen gezeigten Gehäuse, aber ohne Saugschlauch.

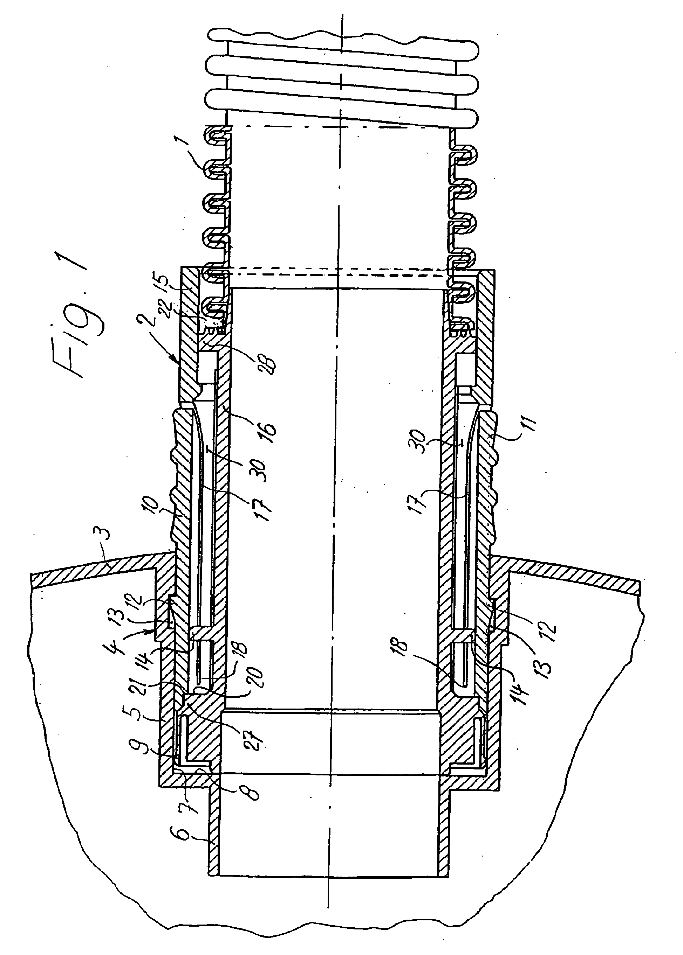

Zunächst wird auf die in Fig. 1 dargestellte Anordnung Bezug genommen, bei welcher ein Saugschlauch 1 über die nachstehend näher beschriebene Kupplungsmuffe 2 des ersten Ausführungsbeispiels lösbar mit einem abgebrochen gezeichneten Gehäuse 3 verbunden ist. Zu diesem Zweck ist das äußere Muffenende für die feste Anbringung des Saugschlauchs 1 an der Kupplungsmuffe 2 auf noch näher zu beschreibende Weise ausgebildet, während das innere Muffenende für das Einstecken in eine damit komplementäre Aufnahmevertiefung des Gehäuses 3 ausgebildet ist.

Die Aufnahmevertiefung ist bei dem in Fig. 1 gezeigten Gehäuse 3 innerhalb eines sich in das Innere des Gehäuses 3 erstreckenden und mit dem Gehäuse einteiligen Stufenrohrs 4 gebildet. Dieses Stufenrohr 4 besitzt einen äußeren Abschnitt 5 größeren Durchmessers und einen inneren Abschnitt 6 mit einem kleineren Durchmesser. Der äußere Abschnitt 5 umschließt mit einer zylindrischen Innenwandfläche 7 das innere Ende der Kupplungsmuffe 2. Die zylindrische Innenwandfläche 7 endet innen an einer Wandungsstufe 8, welche den äußeren Abschnitt 5 mit dem inneren Abschnitt 6 des Stufenrohrs 4 einteilig verbindet und an welche das innere Muffenende anschlägt, wenn die Kupplungsmuffe 2, wie in Fig. 1 gezeigt, vollständig eingeführt ist. Die Abdichtung der Kupplungsmuffe 2 gegenüber dem Gehäuse 3 übernimmt eine am inneren Muffenende ausgebildete flexible Dichtlippe 9, die der zylindrischen Innenwandfläche 7 anliegt.

Am Außenumfang der Kupplungsmuffe 2 befinden sich zwei diametral gegenüberliegende, sich in axialer Richtung erstreckende und elastisch biegbare Rastzungen 10 und 11. Diese sind beim Einführen der Kupplungsmuffe 2 in die von der zylindrischen Innenwandfläche 7 und die Wandungsstufe 8 begrenzte Aufnahmevertiefung nach innen gerichtet einbiegbar und sind an ihren Außenseiten mit Rastnasen 12 versehen. Wenn die Kupplungsmuffe 2 vollständig eingeführt ist und auf die wegbegrenzende Wandungsstufe 8 trifft, erfolgt die Verrastung der Kupplungsmuffe 2 durch Rückfederung der Rastzungen 10, 11, deren Rastnasen 12 dabei in eine Rastnut 13 verrastend eintreten, die in die zylindrische Innenwandfläche 7 umfänglich eingeformt ist.

Wie Fig. 1 veranschaulicht stehen die Rastzungen 10, 11 nach erfolgter Ankupplung an das Gehäuse 3 mit ihren Betätigungsbereichen aus der Aufnahmevertiefung nach außen vor, so daß sie für einen Entkupplungsvorgang zugänglich bleiben. Hierbei werden die Rastzungen 10, 11 gleichzeitig niedergedrückt, d.h. nach innen eingebogen, wobei die Rastnasen 12 aus der Rastnut 13 austreten, wonach die Kupplungsmuffe 2 mit dem daran befindlichen Saugschlauch 1 von dem Gehäuse 3 durch Abziehen getrennt werden kann.

Die Besonderheit der vorstehend beschriebenen Kupplungsmuffe 2 besteht im wesentlichen darin, daß die Rastzungen 10, 11 jeweils innerhalb des axialen Abstandes zwischen ihrer Zungenwurzel, d.h. ihrem dem freien beweglichen Ende gegenüberliegenden festgelegten Ende, und ihrer Rastnase 12 an einem in der Kupplungsmuffe 2 ortsfesten Auflagervorsprung 14 abgestützt sind. Dadurch erhalten die Rastzungen 10, 11 gegenüber nicht so abgestützten Rastzungen eine verbesserte Federungscharakteristik beim Einbiegen und beim Rückfedern. Die Zungenwurzeln werden beim Einbiegen und Rückfedern von materialermüdenden Verformungen mindestens weitgehend entlastet, der erforderliche Verrastungs- und Entrastungsweg der Rastnasen wird durch eine elastische Biegung der Rastzungen über einen beträchtlichen Bereich ihrer Länge erzeugt und die Federkraft der Rastzungen wird merklich erhöht.

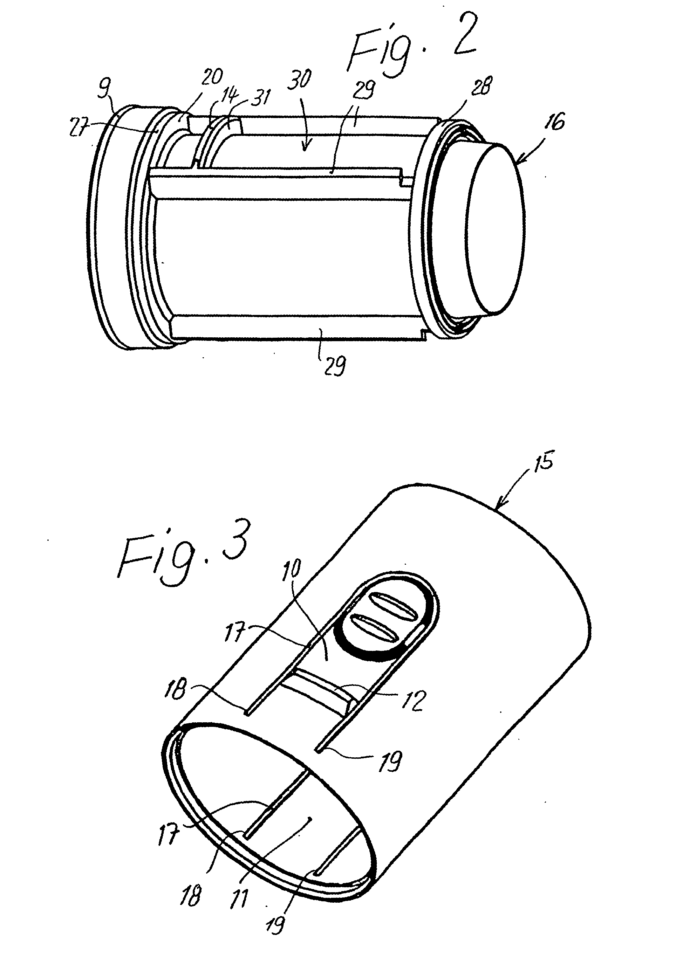

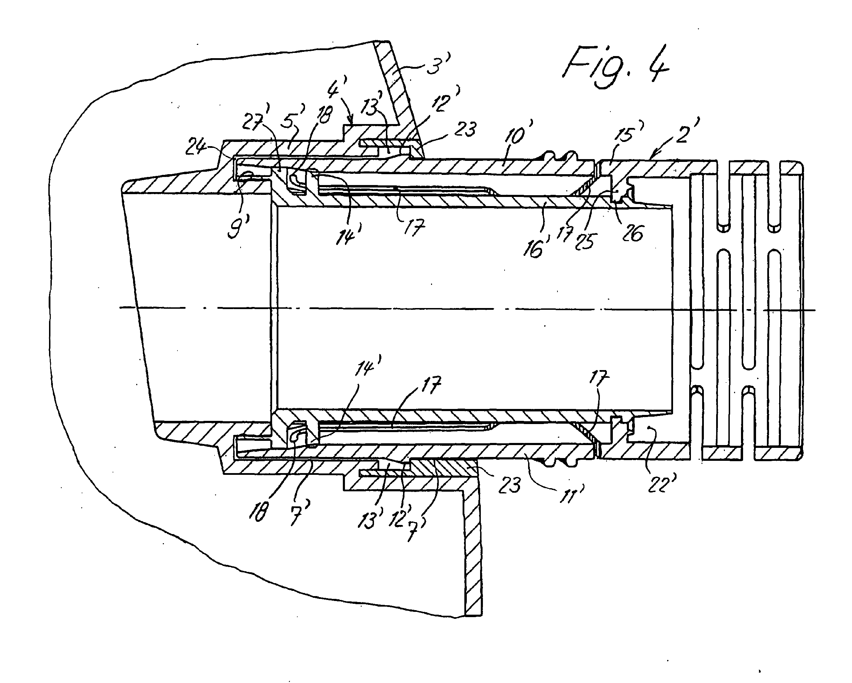

Im ersten Ausführungsbeispiel gemäß Fig. 1 besteht die Kupplungsmuffe 2 aus einem rohrartigen Außenteil 15 (Fig. 3) und einem auf noch zu beschreibende Weise damit fest verbundenen rohrartigen Innenteil 16 (Fig. 2). Beide Teile können den jeweiligen Anforderungen entsprechend aus unterschiedlichen thermoplastischen Kunststoffen spritzgeformt sein, das Außenteil 15 beispielsweise aus Polypropylen und das Innenteil 16 aus Polyethylen. Außenteil 15 und Innenteil 16 sind konzentrisch zueinander angeordnet und weisen über erhebliche Umfangsbereiche einen gegenseitigen radialen Abstand auf. Die Rastzungen 10, 11 sind direkt aus der Wandung des Außenteils 15 gebildet, d.h. sind damit einteilig. Sie sind mit Ausnahme der Zungenwurzeln jeweils von einem die Zungenumrißform definierenden Freischnittspalt 17 umgeben, wie er beispielsweise in Fig. 3 dargestellt ist. Als Zungenwurzel wird hier der zwischen den beiden Enden 18 und 19 des Freischnittspalts 17 befindliche Bereich der Rastzungen 10, 11 bezeichnet, an welchem die Rastzungen 10, 11 in die geschlossene Wandung des Außenteils 15 übergehen. Die Auflagervorsprünge 14 für die Rastzungen 10, 11 sind am Innenteil 16 angeordnet.

Die Rastzungen 10, 11 können an ihren Auflagervorsprüngen 14 mit Vorspannung abgestützt sein, bei den Ausführungsbeispielen dadurch, daß der diametrale Abstand der Auflageflächen an den beiden Auflagervorsprüngen 14 etwas größer ist als der Innendurchmesser des Außenteils 15 (Fig. 1) bzw. 15' (Fig. 4). Bei der Vereinigung von Außenteil und Innenteil biegen daher die Auflagervorsprünge 14 die Rastzungen 10, 11 etwas nach außen, wodurch diese vorgespannt werden.

Wie Fig. 1 verdeutlicht ist das Innenteil 16 von dem für das Einstecken in die Aufnahmevertiefung des Gehäuses 3 vorgesehenen Muffenende her in das Außenteil 15 in axialer Richtung eingeschoben. Der Einschiebeweg wird dadurch begrenzt, daß eine Ringstufe 20 des Innenteils 16 an eine an diesem Muffenende vorgesehene Ringschulter 21 des Außenteils 15 anschlägt. In dieser Relativlage von Außenteil 15 und Innenteil 16 ist am äußeren Muffenende ein nach außen offener Ringraum 22 gebildet, welcher das Ende des Saugschlauchs 1 aufnimmt.

Der Saugschlauch 1 ist durch in den Ringraum 22 eingebrachten Kleber (nicht dargestellt) fest mit der Kupplungsmuffe 2 verbunden, wobei der Kleber gleichzeitig Außenteil 15 und Innenteil 16 fest miteinander verbindet.

Bei dem Ausführungsbeispiel nach Fig. 4 ist das Gehäuse 3' abweichend von dem in Fig. 1 dargestellten Gehäuse 3 ausgebildet. Auch hier ist ein Stufenrohr 4' Bestandteil des Gehäuses 3', jedoch wird eine zylindrische Innenwandfläche 7' nur zum Teil von einem äußeren Abschnitt 5' des Stufenrohrs 4' gebildet, während ein anderer Teil der Innenwandfläche 7' von einer fest mit dem Gehäuse 3' verbundenen Einsatzhülse 23 gebildet wird. Innen ist die Einsatzhülse 23 so mit einer Stufenbohrung versehen, daß nach Anbringung der Einsatzhülse 23 eine Rastnut 13' für die Rastnasen 12' der Rastzungen 10', 11' entsteht. Außenteil 15' und Innenteil 16' sind mit ihren gehäuseseitigen Enden in eine im Stufenrohr 4' gebildete Ringvertiefung 24 eingeführt, wobei wiederum am Innenteil 16' eine Dichtlippe 9' ausgebildet ist, die bei diesem Ausführungsbeispiel der ihr benachbarten Wandfläche der Ringvertiefung 24 zur Abdichtung der Kupplungsmuffe 2' gegenüber dem Gehäuse 3' anliegt.

Wie aus der in Fig. 4 dargestellten Ausbildung der Teile 15', 16' erkennbar ist, wird bei der Montage auch hier das Innenteil 16' von dem für das Einstecken in die Aufnahmevertiefung des Gehäuses 3' vorgesehenen Muffenende her in das Außenteil 15' in axialer Richtung eingeschoben. Am Ende der Einschiebebewegung verrastet ein aus der Innenwand des Außenteils 15' vorstehender Ringvorsprung 25 mit einer am anderen Muffenende im Außenumfang des Innenteils 16' vorgesehenen Ringnut 26. Auch hierbei wird zwischen Außenteil 15' und Innenteil 16' ein Ringraum 22' gebildet, welcher das Ende des (nicht dargestellten) eingeklebten Saugschlauchs aufnimmt.

Der radiale Abstand zwischen dem Außenteil 15 und dem Innenteil 16 und die konzentrische Anordnung dieser Teile wird beim Ausführungsbeispiel gemäß der Fig. 1 bis 3 durch an die Enden des Innenteils 16 angeformte Ringvorsprünge 27 und 28 herbeigeführt. Der Ringvorsprung 27 bildet zugleich die schon erwähnte Ringstufe 20, während der Ringvorsprung 28 den Ringraum 22 begrenzt.

Bei dem Ausführungsbeispiel gemäß Fig. 4 wird der radiale Abstand zwischen dem Außenteil 15' und dem Innenteil 16' und die konzentrische Anordnung dieser Teile einerseits durch einen am inneren Ende des Innenteils 16' angeformten Ringvorsprung 27' und andererseits durch den bereits erwähnten Ringvorsprung 25 des Außenteils 15' herbeigeführt, der auch den Ringraum 22' begrenzt.

Wie am Beispiel des Innenteils 16 des ersten Ausführungsbeispiels in Fig. 2 dargestellt ist sind am Außenumfang des Innenteils 16 gegenseitig beabstandete Axialstege 29 angeformt, die paarweise Aufnahmeräume 30 für die Rastzungen 10, 11 beim Einbiegen seitlich begrenzen. Zwischen den Axialstegen 29 eines jeden der beiden Paare ist ein in Umfangsrichtung des Innenteils 16 verlaufender angeformter Quersteg 31 vorgesehen, der den Auflagervorsprung 14 bildet.

### Bezugszeichenliste

- 1: Saugschlauch
- 2, 2': Kupplungsmuffe
- 3, 3': Gehäuse
- 4, 4': Stufenrohr
- 5, 5': äußerer Abschnitt
- 6: innerer Abschnitt
- 7, 7': zylindrische Innenwandfläche
- 8: Wandungsstufe
- 9, 9': Dichtlippe
- 10, 10': Rastzungen
- 11, 11': Rastzungen
- 12, 12': Rastnasen
- 13, 13': Rastnut
- 14, 14': Auflagervorsprung
- 15, 15': Außenteil
- 16, 16': Innenteil
- 17: Freischnittspalt
- 18: Ende des Freischnittspalts
- 19: Ende des Freischnittspalts
- 20: Ringstufe
- 21: Ringschulter
- 22, 22': Ringraum
- 23: Einsatzhülse
- 24: Ringvertiefung
- 25: Ringvorsprung
- 26: Ringnut
- 27, 27': Ringvorsprung
- 28: Ringvorsprung
- 29: Axialstege
- 30: Aufnahmeräume
- 31: Quersteg

## Patentansprüche

1. Kupplungsmuffe für die lösbare Verbindung eines Saugschlauchs (1) mit einem Gehäuse (3; 3'), insbesondere Staubsaugergehäuse, bei der das eine Muffenende für die feste Anbringung des Saugschlauchs (1) und das andere Muffenende für das Einstecken in eine damit komplementäre Aufnahmevertiefung des Gehäuses (3; 3') ausgebildet ist, wobei am Außenumfang (2) diametral gegenüberliegende, sich in axialer Richtung erstreckende und elastisch biegbare Rastzungen (10, 11; 10', 11') angebracht sind, die beim Einführen in die Aufnahmevertiefung des Gehäuses (3; 3') nach innen gerichtet einbiegbar, bei Erreichen der vorgesehenen Position innerhalb der Aufnahmevertiefung des Gehäuses (3; 3') durch Rückfederung in der Aufnahmevertiefung mittels an ihren Außenseiten vorgesehener Rastnasen (12; 12') verrastbar sind, und nach der Verrastung mit ihren freien Betätigungsendbereichen aus der Aufnahmevertiefung des Gehäuses (3; 3') nach außen vorstehen, wobei die Rastzungen (10, 11; 10', 11') jeweils innerhalb des axialen Abstandes zwischen ihrer Zungenwurzel und ihrer Rastnase (12; 12') abgestützt sind, **gekennzeichnet durch** ein rohrartiges Außenteil (15; 15') und ein damit fest verbundenes konzentrisch angeordnetes rohrartiges Innenteil (16; 16'), das mit radialem Abstand von dem Außenteil (15; 15') ummantelt ist, wobei die Rastzungen (10, 11; 10', 11') aus der Wandung des Außenteils (15; 15') gebildet und mit Ausnahme der Zungenwurzeln jeweils von einem die Zungenumrißform definierenden Freischnittspalt (17) umgeben sind, und wobei die Abstützung der Rastzungen (10, 11; 10', 11') an ortsfesten Auflagervorsprüngen (14, 14') erfolgt, die an das Innenteil (16, 16') angeformt sind.

2. Kupplungsmuffe nach Anspruch 1, **dadurch gekennzeichnet, daß** die Rastzungen (10, 11; 10', 11') an den Auflagervorsprüngen (14; 14') mit Vorspannung abgestützt sind.

3. Kupplungsmuffe nach den Ansprüchen 1 und 2, **dadurch gekennzeichnet, daß** der diametrale Abstand der Auflageflächen an den beiden Auflagervorsprüngen (14; 14') etwas größer ist als der Innendurchmesser des Außenteils (15; 15').

4. Kupplungsmuffe nach den Ansprüchen 1 bis 3, **dadurch gekennzeichnet, daß** das Innenteil (16) von dem für das Einstecken in die Aufnahmevertiefung des Gehäuses (3) vorgesehenen Muffenende her in das Außenteil (15) in axialer Richtung eingeschoben ist, bis eine Ringstufe (20) des Innenteils (16) an eine an diesem Muffenende vorgesehene Ringschulter (21) des Außenteils (15) anschlägt, wobei Außenteil (15) und Innenteil (16) am anderen für die Anbringung des Saugschlauchs (1) bestimmten Muffenende miteinander verklebt sind.

5. Kupplungsmuffe nach den Ansprüchen 1 bis 3, **dadurch gekennzeichnet, daß** das Innenteil (16') von dem für das Einstecken in die Aufnahmevertiefung des Gehäuses (3') vorgesehenen Muffenende her in das Außenteil (15') in axialer Richtung eingeschoben ist, bis eine im Außenumfang des Innenteils (16') am anderen Muffenende vorgesehene Ringnut (26) mit einem aus der Innenwand des Außenteils (15') vorstehenden Ringvorsprung (25) verrastet ist.

6. Kupplungsmuffe nach Anspruch 1, **dadurch gekennzeichnet, daß** der radiale Abstand zwischen dem Außenteil (15; 15') und dem Innenteil (16; 16') und die konzentrische Anordnung dieser Teile durch an die Enden des Innenteils und/oder des Außenteils angeformte Ringvorsprünge (27, 28; 27', 25) herbeigeführt ist.

7. Kupplungsmuffe nach Anspruch 6, **dadurch gekennzeichnet, daß** am Außenumfang des Innenteils (16; 16') gegenseitig beabstandete Axialstege (29) angeformt sind, die paarweise Aufnahmeräume (30) für die Rastzungen (10, 11; 10', 11') beim Einbiegen seitlich begrenzen.

8. Kupplungsmuffe nach einem der Ansprüche 1 bis 6 und Anspruch 7, **dadurch gekennzeichnet, daß** jeweils zwischen den Axialstegen (29) eines Paars ein in Umfangsrichtung des Innenteils (16; 16') verlaufender Quersteg (31) vorgesehen ist, der den Auflagervorsprung (14; 14') bildet.

## Claims

1. Coupling sleeve for releasably connecting a suction hose (1) to a housing (3; 3'), in particular a vacuum cleaner housing, in which one end of the sleeve is designed for fixed attachment of the suction hose (1) and the other end of the sleeve is designed for insertion into a complementary receiving recess of the housing (3; 3'), wherein elastically flexible locking tongues (10, 11; 10', 11') which lie diametrically opposite each other and extend in the axial direction are fitted on the outer circumference (2), which locking tongues can bend inwards during insertion into the receiving recess of the housing (3; 3'), can lock by springing back inside the receiving recess by means of locking projections (12; 12') provided on their outer sides when the intended position within the receiving recess of the housing (3; 3') is reached, and after locking protrude outwards from the receiving recess of the housing (3; 3') with their free actuating end regions, wherein the locking tongues (10, 11; 10', 11') are in each case supported within the axial distance between their tongue base and their locking projection (12; 12'), **characterised by** a tubular outer part (15; 15') and a concentrically arranged tubular inner part (16; 16') which is fixedly connected thereto, said inner part being surrounded by the outer part (15; 15') at a radial distance, wherein the locking tongues (10, 11; 10', 11') are formed from the wall of the outer part (15; 15') and with the exception of the tongue bases are in each case surrounded by a free gap (17) which defines the contour of the tongue, and wherein the locking tongues (10, 11; 10', 11') are supported on fixed bearing protrusions (14; 14') which are integrally formed on the inner part (16, 16').

2. Coupling sleeve according to Claim 1, **characterised in that** the locking tongues (10, 11; 10', 11') are supported on the bearing protrusions (14; 14') with prestress.

3. Coupling sleeve according to Claims 1 and 2, **characterised in that** the diametrical distance between the bearing faces on the two bearing protrusions (14; 14') is somewhat greater than the internal diameter of the outer part (15; 15').

4. Coupling sleeve according to Claims 1 to 3, **characterised in that** the inner part (16) is pushed into the outer part (15) in the axial direction from the end of the sleeve which is provided for insertion into the receiving recess of the housing (3), until an annular step (20) of the inner part (16) comes to bear against an annular shoulder (21) of the outer part (15) which is provided at this end of the sleeve, wherein the outer part (15) and the inner part (16) are adhesively bonded to one another at the other end of the sleeve which is intended for attachment of the suction hose (1).

5. Coupling sleeve according to Claims 1 to 3, **characterised in that** the inner part (16') is pushed into the outer part (15') in the axial direction from the end of the sleeve which is provided for insertion into the receiving recess of the housing (3'), until an annular groove (26) which is provided in the outer circumference of the inner part (16') at the other end of the sleeve locks with an annular protrusion (25) which protrudes from the inner wall of the outer part (15').

6. Coupling sleeve according to Claim 1, **characterised in that** the radial distance between the outer part (15; 15') and the inner part (16; 16') and the concentric arrangement of these parts is brought about by annular protrusions (27, 28; 27', 25) which are integrally formed at the ends of the inner part and/or the outer part.

7. Coupling sleeve according to Claim 6, **characterised in that** axial webs (29) which are spaced apart from one another are integrally formed on the outer circumference of the inner part (16; 16'), wherein pairs of said axial webs laterally delimit receiving spaces (30) for the locking tongues (10, 11; 10', 1.1') when the latter bend inwards.

8. Coupling sleeve according to any of Claims 1 to 6 and Claim 7, **characterised in that** a transverse web (31) which runs in the circumferential direction of the inner part (16; 16') is provided in each case between the axial webs (29) of a pair, said transverse web forming the bearing protrusion (14; 14').

## Revendications

1. Manchon d'accouplement pour la liaison détachable d'un tuyau d'aspiration (1) avec un boîtier (3 ; 3'), en particulier un boîtier d'aspirateur, dans lequel une extrémité du manchon est réalisée pour un assemblage ferme du tuyau d'aspiration (1) et l'autre extrémité du manchon est réalisée pour être enfichée dans un renfoncement de réception, complémentaire à cette extrémité, du boîtier (3 ; 3'), dans lequel des languettes d'enclenchement (10, 11 ; 10', 11') diamétralement opposées, élastiquement souples et s'étendant en direction axiale, sont montées sur la périphérie extérieure (2), lesdites languettes étant susceptibles de fléchir vers l'intérieur lors de l'introduction dans le renfoncement de réception du boîtier (3 ; 3'), et susceptibles de s'enclencher par retour élastique dans le renfoncement de réception au moyen d'ergots d'enclenchement (12 ; 12') prévus sur leurs faces extérieures lorsque la position prévue à l'intérieur du renfoncement de réception du boîtier (3 ; 3') est atteinte, et après enclenchement, elles dépassent vers l'extérieur par leurs zones terminales d'actionnement libres hors du renfoncement de réception du boîtier (3 ; 3'), et lesdites languettes d'enclenchement (10, 11 ; 10', 11') sont soutenues respectivement à l'intérieur de la distance axiale entre leurs racines de languettes et leurs ergots d'enclenchement (12 ; 12'), **caractérisé par** une partie extérieure (15 ; 15') analogue à un tube et par une partie intérieure (16 ; 16') analogue à un tube, agencée concentriquement et fermement reliée à ladite partie extérieure, ladite partie intérieure étant enveloppée par la partie extérieure (15 ; 15') avec un écartement radial, lesdites languettes d'enclenchement (10, 11 ; 10', 11') étant formées à partir de la paroi de la partie extérieure (15 ; 15') et, à l'exception des racines de languettes, entourées chacune par une fente découpée (17) qui définit la forme de contour des languettes, et le soutien des languettes d'enclenchement (10, 11 ; 10', 11') a lieu au niveau de saillies d'appui (14, 14') stationnaires qui sont conformées sur la partie intérieure (16, 16').

2. Manchon d'accouplement selon la revendication 1, **caractérisé en ce que** les languettes d'enclenchement (10, 11 ; 10', 11') sont soutenues avec précontrainte contre les saillies d'appui (14 ; 14').

3. Manchon d'accouplement selon les revendications 1 et 2, **caractérisé en ce que** la distance diamétrale des surfaces d'appui sur les deux saillies d'appui (14 ; 14') est quelque peu plus grande que le diamètre intérieur de la partie extérieure (15; 15').

4. Manchon d'accouplement selon les revendications 1 à 3, **caractérisé en ce que** la partie intérieure (16) est enfilée en direction axiale dans la partie extérieure (15), depuis l'extrémité du manchon prévue pour être enfichée dans le renfoncement de réception du boîtier (3), jusqu'à ce qu'un gradin annulaire (20) de la partie intérieure (16) vienne buter contre un épaulement annulaire (21), prévu à cette extrémité du manchon, de la partie extérieure (15), la partie extérieure (15) et la partie intérieure (16) étant collées l'une à l'autre à l'autre extrémité du manchon destinée au montage du tuyau d'aspiration (1).

5. Manchon d'accouplement selon les revendications 1 à 3, **caractérisé en ce que** la partie intérieure (16') est enfilée en direction axiale dans la partie extérieure (15'), depuis l'extrémité du manchon prévue pour être enfichée dans le renfoncement de réception du boîtier (3'), jusqu'à ce qu'une gorge annulaire (26) prévue dans la périphérie extérieure de la partie intérieure (16') à l'autre extrémité du manchon, vienne s'enclencher avec une saillie annulaire (25) qui dépasse de la paroi intérieure de la partie extérieure (15').

6. Manchon d'accouplement selon la revendication 1, **caractérisé en ce que** la distance radiale entre la partie extérieure (15 ; 15') et la partie intérieure (16 ; 16'), et l'agencement concentrique de ces parties, sont assurés par des saillies annulaires (27, 28 ; 27', 25) conformées aux extrémités de la partie intérieure et/ou de la partie extérieure.

7. Manchon d'accouplement selon la revendication 6, **caractérisé en ce que** des barrettes axiales (25) écartées les unes des autres sont conformées à la périphérie extérieure de la partie intérieure (16 ; 16'), lesdites de barrettes délimitant latéralement par paires des logements de réception (30) pour les languettes d'enclenchement (10, 11 ; 10', 11') lors de leur flexion entrante.

8. Manchon d'accouplement selon l'une des revendications 1 à 6 et la revendication 7, **caractérisé en ce que**, entre les barrettes axiales (29) d'une paire respective, il est prévu une barrette transversale (31) qui s'étend en direction périphérique de la partie intérieure (16 ; 16') et qui forme la saillie d'appui (14 ; 14').
